# FASCICULE DE BREVET EUROPEEN

(11) **EP 3 314 501 B1**
(45) Date de publication et mention de la délivrance du brevet: **05.08.2020**
(21) Numéro de dépôt: 16739231.5
(22) Date de dépôt: 21.06.2016
(51) Int. Cl.: G06F 21/53

(54) **PROCÉDÉ D'AIDE A L'ANALYSE DE L'EXÉCUTION D'UNE MACHINE VIRTUELLE**
HILFSVERFAHREN ZUR ANALYSE DER AUSFÜHRUNG EINER VIRTUELLEN MASCHINE
METHOD FOR ASSISTING WITH THE ANALYSIS OF THE EXECUTION OF A VIRTUAL MACHINE

(30) Priorité: 25.06.2015 FR 1555900
(43) Date de publication de la demande: 02.05.2018
(73) Titulaire: ORANGE, 75015 Paris (FR)
(72) Inventeur: HEBBAL, Yacine, 14000 Caen (FR); LANIEPCE, Sylvie, 14000 Caen (FR)
(86) Numéro de dépôt international: PCT/FR2016/051507
(87) Numéro de publication internationale: WO 2016/207533

(56) Documents cités:
- WO-A1-2011/163146
- AZAB A M ET AL: "HIMA: A Hypervisor-Based Integrity Measurement Agent", COMPUTER SECURITY APPLICATIONS CONFERENCE, 2009. ACSAC '09. ANNUAL, IEEE, PISCATAWAY, NJ, USA, 7 décembre 2009 (2009-12-07), pages 461-470, XP031610290, ISBN: 978-0-7695-3919-5
- Lionel Litty ET AL: "Hypervisor Support for Identifying Covertly Executing Binaries", SS'08 Proceedings of the 17th conference on Security symposium, 31 décembre 2008 (2008-12-31), pages 1-16, XP055007124, Extrait de l'Internet: URL:http://static.usenix.org/event/sec08/t ech/full_papers/litty/litty_html/ [extrait le 2011-09-14]
- YANGCHUN FU ET AL: "Space Traveling across VM: Automatically Bridging the Semantic Gap in Virtual Machine Introspection via Online Kernel Data Redirection", SECURITY AND PRIVACY (SP), 2012 IEEE SYMPOSIUM ON, IEEE, 20 mai 2012 (2012-05-20), pages 586-600, XP032456312, DOI: 10.1109/SP.2012.40 ISBN: 978-1-4673-1244-8

## Description

La présente invention concerne un procédé d'aide à l'analyse de l'exécution d'une machine virtuelle dans un environnement informatique virtualisé, c'est-à-dire rendu virtuel.

Elle trouve une application particulièrement intéressante dans la supervision de systèmes informatiques dont l'architecture est basée sur des ressources informatiques dématérialisées, mises à disposition d'un grand nombre d'utilisateurs qui y accèdent à distance. Une telle architecture est plus connue sous le nom d'architecture en « cloud computing », ou architecture « d'informatique dans le nuage ». La supervision peut être mise en œuvre aussi bien dans un cadre de détection de comportements malicieux que de réaction à des comportements malicieux.

Une architecture en cloud computing comprend habituellement au moins un serveur hôte qui possède des ressources matérielles sur lesquelles s'appuie un service en cloud computing offert par un fournisseur de services à un ou des clients. Le fournisseur de services met à disposition du client une ou des machines virtuelles qui constituent l'environnement d'exécution du service propre au client et qui utilisent les ressources du serveur hôte pour s'exécuter. De manière classique une architecture en cloud computing est conforme à un modèle qui comprend plusieurs couches d'exécution. Dans un exemple de modèle, une première couche d'exécution comprend l'ensemble des ressources matérielles du serveur hôte, telles que de la mémoire, un micro-processeur, une interface réseau, etc. Une deuxième couche d'exécution est une couche de virtualisation adaptée pour présenter à un ou des systèmes d'exploitation de machines virtuelles d'une couche virtuelle un espace de ressources virtuelles, construit à partir d'un espace des ressources matérielles du serveur hôte. Cette couche est mise en œuvre par un module de virtualisation appelé habituellement hyperviseur qui gère l'allocation des ressources matérielles entre les différentes instances de machines virtuelles, et qui met à disposition des machines virtuelles ces ressources virtualisées. Enfin, une troisième couche d'exécution est la couche virtuelle. Les ressources associées à cette couche sont les machines virtuelles, qui s'exécutent dans l'environnement virtuel mis à disposition par le serveur hôte en tant que machine physique. Les machines virtuelles sont par exemple des machines virtuelles de clients qui peuvent comprendre des données ou du code sensibles à protéger.

Dans le cadre du cloud computing, plusieurs approches ont été proposées afin d'analyser le comportement de machines virtuelles d'un serveur hôte dans le but de détecter et/ou pallier des problèmes de sécurité. Une approche qui a vu le jour en 2003 a proposé de se placer au niveau de la couche de virtualisation de l'environnement, c'est-à-dire de l'hyperviseur, afin d'inspecter l'utilisation des ressources par les machines virtuelles et de détecter à ce niveau, d'éventuels problèmes de sécurité. Une telle approche présente plusieurs avantages. Elle se place en dehors de la machine virtuelle et est donc hors de portée d'un attaquant qui aurait pris le contrôle d'une ou de plusieurs machines virtuelles. Par ailleurs, elle permet d'avoir une visibilité complète du système puisqu'elle offre une visibilité de l'utilisation des ressources matérielles par l'ensemble des machines virtuelles. Une telle méthode est connue sous le nom de « méthode d'introspection de machines virtuelles ». Cependant, une difficulté connue de cette méthode est d'interpréter les informations observées au niveau de l'hyperviseur. En effet, les informations observables à ce niveau sont des informations bas niveau, ou données brutes (on parle de « raw data » en anglais), typiquement des 0 et des 1, qu'il est nécessaire d'interpréter. Notamment, il est nécessaire, à partir de ces données brutes d'obtenir une sémantique au niveau d'une machine virtuelle afin de qualifier une activité sur cette machine, en termes par exemple d'exécution d'un programme ou d'un processus, d'accès à un fichier, d'exécution d'un virus, d'information de registres, etc. Cette différence entre des données brutes et des données représentatives d'une activité clairement identifiée sur une machine virtuelle est qualifiée de fossé sémantique (ou « semantic gap » en anglais). Différents travaux portent sur le comblement de ce fossé afin d'analyser, à partir de données brutes observées au niveau de l'hyperviseur, le comportement d'une ou de plusieurs machines virtuelles de l'environnement en cloud computing.

La demande de brevet publiée sous le numéro US2015/0033227 décrit une méthode d'analyse du comportement de machines virtuelles à partir de l'observation de l'activité de l'hyperviseur d'un serveur hôte qui héberge ces machines virtuelles. La méthode vise à combler le fossé sémantique entre des données bas niveau observées au niveau de l'hyperviseur et des informations sémantiquement significatives pour un opérateur humain et qui concernent les activités des machines virtuelles hébergées par le serveur hôte. Cette méthode propose d'adjoindre à une machine virtuelle à superviser une machine virtuelle sécurisée qui héberge le même système d'exploitation. Les deux machines virtuelles ont ainsi la même logique, notamment dans la gestion des processus, mais des données différentes qui leur sont propres puisqu'elles accèdent chacune à une ou des pages mémoire qui leur ont été allouées par l'hyperviseur. L'idée décrite dans cette demande est que, lorsqu'il est détecté, au niveau de l'hyperviseur, une demande d'exécution d'une fonction du noyau du système d'exploitation avec un accès mémoire à des données du noyau au niveau de la machine sécurisée, la fonction correspondante de la machine virtuelle sécurisée est exécutée avec les données de la machine virtuelle à superviser. Ainsi, lorsque par exemple l'exécution d'une fonction qui liste les processus actifs sur la machine virtuelle à superviser est requise, la fonction s'exécute sur la machine sécurisée et accède aux données présentes dans la mémoire de la machine à superviser. La machine virtuelle sécurisée obtient alors la liste des processus qui s'exécutent sur la machine virtuelle à superviser. Elle peut ainsi analyser le comportement de la machine virtuelle à superviser sans interagir avec cette machine. Afin de mettre en œuvre un tel procédé, il est nécessaire que l'hyperviseur intègre la connaissance du système d'exploitation de la machine virtuelle à superviser. Cette connaissance est fournie à l'initialisation, de manière statique. Il est nécessaire également de définir une machine virtuelle de sécurité par système d'exploitation.

Avec cette méthode, l'hyperviseur ne sait pas gérer automatiquement une évolution d'une version de système d'exploitation. Dans le cas d'un nouveau système d'exploitation, il est obligé de fournir une nouvelle machine virtuelle de sécurité propre à mettre en œuvre la redirection vers les données du noyau pour ce nouveau système d'exploitation. Par ailleurs, dans un environnement qui comprend plusieurs machines virtuelles, chacune s'exécutant potentiellement sur un système d'exploitation différent, il est nécessaire d'ajouter autant de machines virtuelles sécurisées que de systèmes d'exploitation différents. Dans des environnements qui comprennent potentiellement de très nombreuses machines virtuelles, cela n'est pas anodin en termes de dimensionnement et de complexité. Par ailleurs, les performances de l'environnement peuvent être impactées de façon notable par l'ajout de machines virtuelles sécurisées. En effet, avec cette méthode, l'hyperviseur intercepte chaque instruction afin d'identifier celles qui concernent l'exécution d'une fonction du noyau et exécute les instructions pas à pas. Cela ralentit d'autant plus l'exécution des machines virtuelles. L'article "HIMA: A Hypervisor-Based Integrity Measurement Agent" par Azab A M et al. divulgue un procédé effectué par un agent au sein de l'hyperviseur permettant de mesurer l'intégrité de segments de code de composants noyau et de programmes utilisateurs tournant à l'intérieur d'une machine virtuelle. Cet agent procède par interception d'appels système effectués par la machine virtuelle et par obtention dans le descripteur de procédé courant des adresses de début et de fin du code à mesurer. Un condensat du code est ensuite obtenu permettant de vérifier son intégrité.

Un des buts de l'invention est de remédier à des insuffisances/inconvénients de l'état de la technique et/ou d'y apporter des améliorations.

A cette fin, l'invention propose un procédé tel que défini par la revendication 1.

Le procédé d'aide à l'analyse de l'exécution d'une machine virtuelle propose une solution pour combler le fossé sémantique entre des données bas niveau, visibles au niveau de l'hyperviseur et relatives à l'exécution d'une machine virtuelle, et une interprétation de ces données en termes compréhensibles par un être humain. En effet, le procédé permet de construire pour la machine virtuelle une table de correspondance qui associe à une adresse mémoire correspondant à un point d'entrée d'une fonction du noyau du système d'exploitation, le prototype de la fonction qui comprend entre autres le nom de cette fonction. Une telle table constitue une interface haut-niveau d'accès à des données via l'hyperviseur.

Le procédé est indépendant des systèmes d'exploitation des machines virtuelles dont on souhaite analyser l'activité. En ce sens il est qualifié de « OS-agnostique ». En effet, les étapes du procédé sont identiques, quel que soit le système d'exploitation. Ce sont les données qu'il manipule et calcule lors du traitement d'une machine virtuelle, en l'espèce des condensés d'instructions de fonctions, qui sont spécifiques au système d'exploitation de la machine virtuelle. Le procédé calcule ces condensés à partir des instructions des fonctions du noyau de la machine virtuelle et compare ces condensés à des condensés de référence pour le système d'exploitation, stockés dans une base de données.

Le procédé peut être qualifié de sécurisé car son indépendance par rapport aux machines virtuelles analysées ne permet pas à un attaquant qui aurait pris le contrôle d'une machine virtuelle de perturber l'exécution du procédé.

Dans un autre exemple de réalisation, l'étape de recherche comprend une étape d'envoi d'un message d'interrogation à la base de données de référence, ledit message d'interrogation comprenant le nom d'une fonction de hachage utilisée pour calculer le condensé.

Cet exemple de réalisation est adapté à un cas où la base de référence est une base de référence du commerce qui comprend des condensés calculés à partir d'une pluralité de fonctions de hachage. La recherche dans la base peut ainsi ne porter que sur une partie de la base. Elle est ainsi plus rapide. Par ailleurs, dans le cas où le condensé requis n'est pas trouvé, on a la garantie que la fonction courante n'est pas une fonction du noyau du système d'exploitation.

Dans un exemple de réalisation, le procédé d'analyse comprend dans une phase d'apprentissage, pour au moins le système d'exploitation d'une machine virtuelle d'apprentissage, ledit système d'exploitation étant identique à celui de la machine virtuelle, les étapes suivantes :
- localisation d'au moins une fonction du noyau du système d'exploitation,
- identification dans une zone mémoire associée à la machine virtuelle d'apprentissage d'une première instruction de référence correspondant au point d'entrée de la fonction du noyau,
- identification dans la zone mémoire associée à la machine virtuelle d'apprentissage d'une deuxième instruction de référence correspondant à la fin de la fonction du noyau,
- calcul d'un condensé des instructions comprises entre la première instruction de référence et la deuxième instruction de référence de la fonction du noyau,
- enregistrement dudit condensé en association avec un prototype de ladite fonction du noyau, ledit prototype comprenant le nom de la fonction du noyau.

La solution repose sur un apprentissage préalable du système d'exploitation pendant lequel les condensés des instructions de tout ou partie des fonctions du noyau du système d'exploitation sont calculés et référencés en association avec les prototypes des fonctions. Cette connaissance du système d'exploitation permet ensuite, pour une fonction du noyau de la machine d'identifier et d'associer le point d'entrée de la fonction à son prototype, créant ainsi un lien entre une adresse mémoire et un nom de fonction compréhensible pour un être humain. Cet apprentissage peut être automatique, dans le cas où un prototype de fonction du noyau est disponible dans le code source du système d'exploitation pour la fonction du noyau, ou semi-automatique dans le cas où un administrateur système fournit le prototype de la fonction du noyau à partir de la documentation du système d'exploitation. L'apprentissage permet une prise en compte aisée d'un nouveau système d'exploitation. En effet dans ce cas, l'apprentissage est mis en œuvre pour le nouveau système d'exploitation selon la même méthode.

De façon avantageuse, le procédé comprend, préalablement à l'étape de calcul du condensé des instructions, une étape de suppression dans les instructions comprises entre la première instruction et la deuxième instruction de zones de données aléatoires.

Ne pas tenir compte d'adresse mémoire randomisées permet d'avoir la garantie que le condensé qui est calculé pour la fonction du noyau lors de la phase d'apprentissage, ou pour une fonction courante lors de la phase d'exécution de la machine virtuelle dans son environnement opérationnel est identique même après redémarrage d'une machine virtuelle.

Dans un autre exemple de réalisation le procédé comprend, préalablement à l'étape de calcul du condensé des instructions, une étape de sélection des opérandes de type registre et des codes opérations compris entre la première instruction de référence et la deuxième instruction de référence de zones de données aléatoires.

Cet exemple correspond à une alternative à l'obtention d'un condensé identique d'une fonction du noyau ou d'une fonction courante, même après redémarrage de la machine virtuelle.

Dans un exemple de réalisation, une adresse correspondant à l'adresse de fin de la fonction courante est enregistrée en association avec le prototype de la fonction du noyau.

Cela permet d'intégrer dans des mécanismes de supervision de l'exécution de machines virtuelles, l'interception de la fin d'exécution d'une fonction spécifique et des traitements spécifiques, fonction du résultat de l'exécution de cette fonction. Cela ouvre des perspectives nouvelles pour la supervision de la sécurité, qui habituellement permet une interception du début d'exécution d'une fonction.

L'invention porte également sur une utilisation, du procédé d'analyse tel que décrit précédemment, par un module de supervision de l'exécution d'une machine virtuelle, ledit module de supervision commandant à l'hyperviseur d'injecter dans la machine virtuelle l'appel d'une fonction du noyau.

Cela constitue un premier exemple d'utilisation du procédé d'aide à l'analyse de l'exécution d'une machine virtuelle.

L'invention concerne aussi une utilisation du procédé d'analyse tel que décrit précédemment, par un module de supervision de l'exécution d'une machine virtuelle, ledit module de supervision commandant à l'hyperviseur de positionner des bits associés au caractère exécutable d'une fonction du noyau à non exécutable de manière à recevoir une notification lors de l'exécution de ladite fonction par la machine virtuelle.

Cela constitue un deuxième exemple d'utilisation du procédé d'aide à l'analyse de l'exécution d'une machine virtuelle.

L'invention concerne aussi un utilisation du procédé d'analyse tel que décrit précédemment, par un module de supervision de l'exécution d'une machine virtuelle, ledit module de supervision commandant à l'hyperviseur d'injecter une instruction d'interception d'activité dans le code d'une fonction du noyau de manière à recevoir une notification lors de l'exécution de ladite fonction par la machine virtuelle.

Cela constitue un troisième exemple d'utilisation du procédé d'aide à l'analyse de l'exécution d'une machine virtuelle dans lequel du code correspondant à des instructions d'interception est injecté dans le code d'une fonction du noyau pour laquelle on souhaite que l'hyperviseur soit notifié lors de son exécution. Il présente l'avantage d'être souple et configurable en permettant de choisir précisément les fonctions du noyau pour lesquelles on souhaite que l'hyperviseur soit notifié et le type de notification que l'hyperviseur reçoit. Notamment on peut choisir une notification qui interrompt l'exécution de la machine virtuelle ou une notification qui ne l'interrompt pas.

L'invention porte également sur un serveur tel que défini par la revendication indépendante 10.

L'invention concerne aussi un programme d'ordinateur sur un support de données et chargeable dans la mémoire d'un ordinateur, le programme comprenant des portions de code pour l'exécution des étapes du procédé d'aide à l'analyse de l'exécution d'au moins une machine virtuelle tel que décrit précédemment, lorsque le programme est exécuté sur ledit ordinateur.

L'invention concerne aussi un support de données dans lequel est enregistré le programme tel que décrit précédemment.

D'autres caractéristiques et avantages de la présente invention seront mieux compris de la description, de l'annexe et des dessins annexés parmi lesquels :
- la figure 1 présente les étapes d'une phase d'apprentissage d'un procédé d'aide à l'exécution d'au moins une machine virtuelle, selon un exemple de réalisation ;
- la figure 2 présente les étapes d'une phase de localisation et d'identification d'un procédé d'aide à l'exécution d'au moins une machine virtuelle, selon un exemple de réalisation ;
- le figure 3 présente les étapes d'un procédé de supervision de l'exécution d'une machine virtuelle, selon un exemple de réalisation ;
- la figure 4 présente les étapes d'un procédé de supervision de l'exécution d'une machine virtuelle, selon un deuxième exemple de réalisation ;
- la figure 5 est une représentation schématique d'un dispositif d'aide à l'exécution d'une machine virtuelle, selon un exemple de réalisation ;
- l'annexe présente à titre d'exemple, les instructions de deux fonctions du noyau du système d'exploitation Linux en langage assembleur.

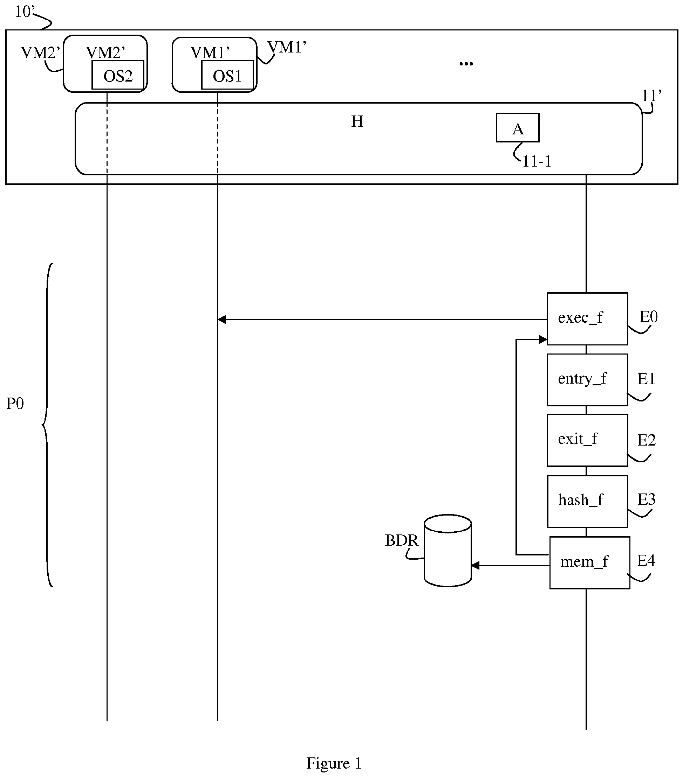

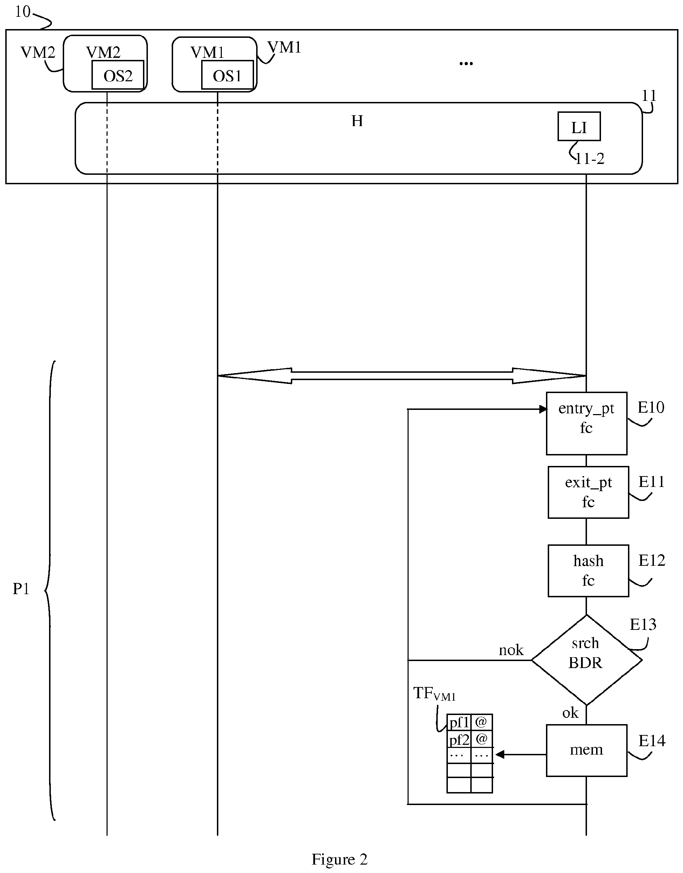

Les étapes d'un procédé d'aide à l'analyse de l'exécution d'une machine virtuelle, selon un exemple de réalisation va maintenant être décrit en relation avec les figures 1 et 2.

Le procédé comprend une première phase d'apprentissage P0, mise en œuvre dans un environnement d'apprentissage, et une seconde phase P1 de localisation et d'identification de fonctions mise en œuvre dans un environnement d'exécution de machines à superviser.

Dans l'environnement d'exécution un serveur hôte 10 héberge une pluralité de machines virtuelles VM1, VM2, etc. Ces machines virtuelles sont par exemple des machines mises à disposition de clients par un fournisseur de solutions cloud computing qui gère le serveur hôte 10. Chaque machine possède son propre système d'exploitation OS1, OS2, etc., identifié le cas échéant par un numéro de version. Dans cet exemple on suppose que tous les systèmes d'exploitation sont différents les uns des autres. De manière classique, le serveur hôte 10 possède une certaine quantité de ressources matérielles, telles que de la mémoire, des interfaces réseau, un processeur, etc., qui sont virtualisées par un hyperviseur 11 et mises à disposition des machines virtuelles VM1, VM2, etc., conformément à des contrats entre les clients et le fournisseur établissant la quantité de ressources allouée à chaque machine virtuelle. L'hyperviseur 11 qui met à disposition des machines virtuelles des ressources virtualisées est un intermédiaire entre le système d'exploitation des machines virtuelles et les ressources matérielles de la couche d'exécution matérielle du serveur hôte 10.

Le procédé se propose de fournir les moyens d'interpréter l'activité d'une machine virtuelle telle qu'observée au niveau de l'hyperviseur, en termes compréhensibles pour un être humain. L'observation de l'activité des machines virtuelles et son interprétation sont destinées à être utilisées par des outils de supervision pour la détection de problèmes de sécurité sur les machines virtuelles supervisées, et le cas échéant pour la mise en œuvre de mesures de réaction. L'étude du comportement de machines virtuelles à partir de l'activité de l'hyperviseur est plus connue sous le nom « d'introspection de machines virtuelles ».

Une difficulté inhérente à l'introspection de machines virtuelles est que les informations observables au niveau de l'hyperviseur sont des informations bas niveau, ou données brutes (on parle de « raw data » en anglais) sous forme de '0' et de '1' qu'il est nécessaire d'interpréter pour qualifier précisément une activité sur une machine virtuelle, en termes par exemple d'exécution d'un programme ou d'un processus, d'accès à un fichier, etc. Cette différence entre données brutes et activité compréhensible pour un être humain est qualifiée de fossé (ou « gap » en anglais) sémantique. Fournir une interprétation compréhensible pour un être humain de l'activité d'une machine à partir de données brutes permet donc de combler le fossé sémantique.

On s'intéresse ici à l'observation de l'exécution des fonctions du noyau (ou « kernel » en anglais) du système d'exploitation des machines virtuelles. Le noyau joue un rôle fondamental dans un système d'exploitation. Il gère les ressources des machines virtuelles par l'intermédiaire de l'hyperviseur et permet aux composants logiciels et matériels de communiquer entre eux. Les fonctions du noyau constituent des fonctions élémentaires qui implémentent des fonctionnalités nécessaires pour la détection et le traitement de problèmes de sécurité. On surveille donc l'exécution de ces fonctions et on les utilise le cas échéant. En outre, il est connu que des logiciels malveillants (ou « malware » en anglais) utilisent ces fonctions élémentaires pour perpétrer des attaques contre des systèmes d'exploitation. Par ailleurs, ces fonctions sont connues, toutes identifiées et documentées pour un système d'exploitation donné. Une documentation associée à un système d'exploitation liste ainsi des prototypes de fonctions du noyau. Le prototype d'une fonction est une description de la fonction qui comprend le nom de la fonction, le type des arguments ou paramètres d'entrée de la fonction et le type de la valeur renvoyée. Par exemple, dans le système d'exploitation Linux, la fonction « kill » qui envoie un signal « sig » à un processus « pid » a comme prototype : int kill (pid_t pid, int sig) ; la fonction « kill » retourne un entier, par exemple « 0 » lorsque l'opération s'est déroulée avec succès. Pour informations, le noyau du système d'exploitation Linux comprend plus de 365 fonctions.

On suppose que l'on dispose de la liste des fonctions du noyau décrites au moyen de leur prototype pour les systèmes d'exploitation OS1, OS2, etc., des machines virtuelles VM1, VM2, etc., du serveur hôte 10.

Le procédé d'aide à l'analyse de l'exécution d'une machine virtuelle comprend une première phase d'apprentissage P0 décrite en relation avec la figure 1, destinée à construire une base de données de référence BDR qui, à une fonction connue du noyau d'un système d'exploitation associe un condensé de l'ensemble des instructions qui constituent le code de la fonction. Cette base de données BDR est destinée à référencer l'ensemble des fonctions du noyau du ou des systèmes d'exploitation des machines virtuelles dont on souhaite analyser l'exécution, et à obtenir pour chaque fonction une signature destinée à être ensuite identifiée au niveau de l'hyperviseur lors de l'exécution effective d'une machine virtuelle dans son environnement en cloud computing.

On suppose que dans l'environnement d'apprentissage, un serveur hôte 10' héberge des machines virtuelles d'apprentissage VM1', VM2', etc. dont les systèmes d'exploitation respectifs OS1, OS2, etc., sont identiques à ceux des machines virtuelles VM1, VM2, etc., dont on souhaite analyser l'exécution. On suppose également que l'on dispose de la liste des fonctions du noyau des systèmes d'exploitation décrites au moyen de leur prototype pour les systèmes d'exploitation OS1, OS2, etc., des machines virtuelles d'apprentissage VM1', VM2', etc., du serveur hôte d'apprentissage 10'.

Les étapes de la phase d'apprentissage P0 sont mises en œuvre par un module d'apprentissage 11-1. Le module d'apprentissage 11-1 est un module logiciel apte à localiser successivement les fonctions du noyau du système d'exploitation d'une machine virtuelle apprentissage dans la zone mémoire allouée à une machine virtuelle d'apprentissage et à calculer un condensé de leurs instructions. Dans un exemple de réalisation, le module d'apprentissage 11-1 est compris dans l'hyperviseur 11.

Dans la phase P0 d'apprentissage, dans une sous-étape E0 de localisation, une fonction du noyau du système d'exploitation OS1 de la machine virtuelle d'apprentissage VM1' est localisée par le module d'apprentissage 11-1 dans une zone mémoire allouée à la machine virtuelle d'apprentissage VM1'. Plus précisément, le module d'apprentissage 11-1 commande le chargement en mémoire du code binaire de la fonction du noyau par le système d'exploitation OS1 de la machine virtuelle d'apprentissage VM1' et analyse le code binaire au niveau de la zone mémoire allouée par l'hyperviseur à la machine virtuelle d'apprentissage VM1' sur le serveur hôte d'apprentissage 10'. Au niveau de cette zone mémoire, le code d'exécution de la fonction est visible en langage machine, peu accessible pour un être humain. Il s'agit de 0 et de 1.

Dans un premier exemple de réalisation, propre à des systèmes d'exploitation dont le code source du noyau est disponible et comprend les prototypes des fonctions du noyau, le module d'apprentissage 11-1 compile le code source du noyau afin de localiser l'ensemble des fonctions du noyau. En effet, grâce à la compilation du code source, le code binaire associé est généré dans un fichier au niveau de la machine virtuelle d'apprentissage VM1 dans lequel apparaissent explicitement les fonctions du noyau. Dans cet exemple, on peut qualifier l'apprentissage d'automatique. Cet exemple s'applique à un système d'exploitation comme Linux.

Dans un deuxième exemple de réalisation, adapté à des systèmes d'exploitation qui ne donnent pas accès au code source du noyau, un programme source qui comprend l'appel à des fonctions du noyau est créé et compilé par le module d'apprentissage 11-1. L'exécution du programme provoque le chargement en mémoire du code binaire de la fonction du noyau appelée. Le programme source comprend, outre l'appel à une fonction du noyau, le prototype associé en tant que marqueur dans le code source. La fonction du noyau ainsi marquée est plus facilement localisable dans le code binaire obtenu. Dans cet exemple, l'apprentissage est qualifié de semi-automatique dans le sens où il faut créer un programme d'appel pour les fonctions du noyau et leur associer leur prototype en tant que marqueur. A noter que ce deuxième exemple s'applique également aux systèmes d'exploitation qui mettent à disposition le code source de leur noyau.

Dans une étape E1 d'identification d'un point d'entrée, le module d'apprentissage 11-1 recherche dans la zone mémoire associée au code binaire de la fonction du noyau, une instruction représentative du point d'entrée de la fonction du noyau. Dans un exemple de réalisation, et afin d'identifier cette instruction, le code binaire, ou langage machine, de la zone mémoire correspondant à la fonction du noyau du système d'exploitation OS1 est traduit en langage assembleur. Le langage assembleur est un langage bas niveau qui représente le langage machine sous une forme d'instructions compréhensibles par un être humain. A cette fin, le module d'apprentissage 11-1 scanne la zone mémoire de la machine virtuelle d'apprentissage VM1' pas à pas jusqu'à trouver une instruction de création de pile, en l'espèce la valeur hexadécimale « 55 », et affiche au moyen d'un outil de traduction le code assembleur correspondant. L'outil de traduction est par exemple la librairie « XED » qui présente l'avantage d'être indépendant de tout système d'exploitation.

A titre d'exemple, en annexe est présenté le code assembleur de deux fonctions du noyau Linux : « getpid », qui retourne l'identifiant d'un processus actif, et « kill » qui permet d'envoyer un signal à un processus et qui est utilisée pour demander l'arrêt d'un processus en cours d'exécution. Dans une première colonne figurent des adresses mémoire en hexadécimal associées à des instructions élémentaires qui composent la fonction. Une deuxième colonne présente la taille des instructions en octets. Une troisième colonne comprend les représentations en hexadécimal des instructions présentes aux adresses précisées en première colonne, et enfin une quatrième colonne fournit la représentation en langage assembleur des instructions de la fonction. Les instructions qui composent les fonctions « getpid » et « kill » sont comprises entre l'instruction « PUSH EBP » suivie à l'adresse suivante de l'instruction « MOV EBP, ESP », et l'instruction « RET » qui correspond à la dernière instruction ou instruction de fin d'exécution de la fonction. L'instruction « PUSH EBP » correspond à la première instruction, ou point d'appel de la fonction du noyau. A noter qu'entre la première et la dernière instruction figurent des instructions particulières qui sont des appels à du code situé à une certaine adresse. Un tel appel correspond par exemple à l'instruction « CALL 0xc10bb0c0 », où « 0xc10bb0c0 » désigne l'adresse du code à exécuter. Il est connu que certains systèmes d'exploitation rendent aléatoire, d'un démarrage de machine virtuelle à un autre, l'adresse à laquelle un code peut être trouvé. Il s'agit du mécanisme connu sous le nom de «distribution aléatoire de l'espace d'adressage », (ou « Address Space Layout Randomization » en anglais), destiné à limiter l'effet de certaines attaques qui se basent sur des structures fixes, connues et documentées des processus.

On note que dans la plupart des systèmes d'exploitation, et par exemple dans le système Linux, le code d'une fonction commence par des instructions de création de pile locale, par exemple une instruction de la forme « PUSH EBP » suivie d'une instruction « MOV EBP, ESP » en langage assembleur. Comme illustré en annexe, le point d'entrée des fonctions « getpid » et « kill » est l'instruction «PUSH EBP » en langage assembleur, ou « 55 » en hexadécimal.

Dans une étape suivante E2 d'identification d'un point de sortie, il est recherché dans la représentation assembleur de l'exécution de la fonction du noyau, une deuxième instruction qui correspond au point de sortie de la fonction.. A cette fin il est recherché à partir du point d'entrée identifié précédemment une instruction associée de fin de fonction, par exemple une instruction de la forme « RET », « IRET », « SYSRET », « SYSEXIT », « JMP » inconditionnel. Pour les fonctions « getpid » et « kill », le point de sortie est l'instruction « RET » en langage assembleur, ou « c3 » en hexadécimal, comme illustré en annexe.

Dans une sous-étape E3 de calcul d'un condensé, il est calculé pour la fonction du noyau observée un condensé des instructions au moyen d'une fonction de hachage. Ce condensé est calculé à partir de la représentation en assembleur de la fonction, en prenant en entrée les instructions comprises entre l'instruction représentative du point d'entrée de la fonction et l'instruction de fin d'exécution. Pour les fonctions présentées en annexe, le calcul se fait entre les instructions « PUSH EBP » et « RET ». Le calcul du condensé prend en compte des codes opérations, ou « opcode », qui correspondent aux actions à exécuter par le processeur, et des opérandes de type registre. Afin de garder un condensé similaire entre deux fonctions du noyau identiques, il n'est pas tenu compte pour le calcul du condensé des adresses susceptibles d'être randomisées. Le condensé est calculé au moyen d'une fonction de hachage, par exemple MD5 (pour « Message Digest »). Une fonction de hachage permet d'obtenir à partir de données d'entrée de taille importante, des données de sortie de taille fixe, typiquement 16, 32 ou 64 bits. Cette représentation est donc intéressante pour optimiser l'espace de stockage des fonctions du noyau ; elle facilite également la recherche dans une base. Le temps de calcul d'une fonction de hachage est très rapide. Enfin, une fonction de hachage a comme propriété que pour tout x dont on connaît l'image par la fonction de hachage, il est très difficile de calculer y tel que l'image de *y* par la fonction de hachage est égal à l'image de *x* par la fonction de hachage. L'invention ne se limite bien sûr à la fonction MD5. D'autres fonctions de hachage peuvent être utilisées, par exemple SHA-1 (pour « Secure Hash Algorithm »).

Dans une sous-étape E4 d'enregistrement, le condensé obtenu est mémorisé dans la base de référence BDR, en association avec le prototype de la fonction du noyau qui apparaît dans le code source.

Les étapes EO à E4, ou E1 à E4 dans le cas où l'ensemble des fonctions du noyau ont été traitées lors de la première itération de l'étape E0, sont itérées pour toutes les fonctions du noyau du système d'exploitation de la machine virtuelle d'apprentissage VM1', ou uniquement pour les fonctions du noyau dont on souhaite superviser l'exécution. Au terme de ces itérations, la base de référence BDR mémorise l'ensemble des condensés des fonctions du noyau du système d'exploitation OS1 de la machine virtuelle d'apprentissage VM1' et les prototypes de fonction associés.

Dans une variante de réalisation, le module d'apprentissage 11-1 comprend un module d'appel de fonctions programmé pour appeler successivement l'ensemble des fonctions du noyau du système d'exploitation d'une machine virtuelle d'apprentissage VM1 ou uniquement celles intéressantes pour la supervision. Ce module d'appel comprend des marqueurs de code qui permettent de délimiter l'exécution des différentes fonctions du noyau. Dans cette variante, le module d'appel est mis en œuvre durant l'étape E0 de localisation. Les marqueurs positionnés par le module d'appel sont visibles dans le code exécuté et visualisés dans la représentation en assembleur. Les étapes E1 à E4 sont alors mises en œuvre sur la représentation en assembleur correspondant à l'exécution de l'ensemble des fonctions du noyau du système.

Les étapes de la phase d'apprentissage P0 ont été décrites pour la machine virtuelle d'apprentissage VM1', plus précisément pour le système d'exploitation OS1 de la machine virtuelle d'apprentissage VM1'. La phase d'apprentissage P0 est mise en œuvre également pour d'autres machines virtuelles d'apprentissage dont on souhaite analyser l'exécution et qui possèdent des systèmes d'exploitation différents de celui de la machine virtuelle d'apprentissage VM1', afin de référencer les fonctions noyau des autres systèmes d'exploitation. Ici, on suppose que les sous-étapes de la phase d'apprentissage P0 sont mises en œuvre également pour les systèmes OS2, etc., de machines virtuelles d'apprentissage VM2, etc., du serveur hôte d'apprentissage 10'.

A noter que pour deux systèmes d'exploitation différents, voire deux versions différentes d'un même système d'exploitation, il est possible d'avoir un prototype de fonction du noyau différent, ou/et un code de fonction différent pour un même prototype. La base de référence BDR est agencée pour enregistrer pour un prototype de fonction du noyau donné, plusieurs condensés correspondant par exemple à une même fonction dont le code est différent selon le système d'exploitation. Il est possible également d'enregistrer, pour une même fonction du noyau, c'est-à-dire une fonction qui d'un système à un autre correspond à la même sémantique, par exemple, récupération des identifiants d'un processus, un prototype différent. Dans ce cas, les deux prototypes sont enregistrés et pour chacun, le ou les condensés associés.

L'environnement d'apprentissage est dédié au peuplement de la base de données de référence BDR et héberge des machines virtuelles d'apprentissage qui comprennent des systèmes d'exploitation différents. Il est possible de référencer l'ensemble des fonctions noyau des systèmes d'exploitation existants. Dans un autre exemple de réalisation, plusieurs fonctions de hachage sont utilisées pour le calcul des condensés des fonctions noyau des systèmes d'exploitation. La base de données de référence BDR peut décliner les fonctions des noyaux des systèmes d'exploitation par fonction de hachage. Ainsi, une base de référence BDR très complète en termes de systèmes d'exploitation et de fonctions de hachage peut être construite. Il est ensuite possible de construire, à partir de la base de référence BDR, des sous bases propres à des environnements d'exécution qui comprennent uniquement les données propres à des systèmes d'exploitation à superviser et propres à une fonction de hachage.

Dans la phase suivante P1 de localisation et d'identification, décrite en relation avec la figure 2, des fonctions d'une machine virtuelle, il est identifié dans la zone mémoire allouée à une machine virtuelle dont on souhaite analyser l'exécution, à quelle adresse une fonction du noyau est localisée et de quelle fonction il s'agit. Ces informations sont destinées à être mémorisées dans une table TF_{VMx} des adresses des fonctions du noyau propres à chaque machine virtuelle, et qui fournit une cartographie de la machine virtuelle en termes de fonctions du noyau du système d'exploitation et de localisation de ces fonctions. Un module 11-2 de localisation et d'identification comprend des instructions de code agencées pour mettre en œuvre les étapes du procédé de localisation et d'identification mises en œuvre au cours de la phase P1. Dans un exemple de réalisation, le module 11-2 de localisation et d'identification est compris dans l'hyperviseur 11. La phase P1 de localisation et d'identification est mise en œuvre de préférence à la fin du démarrage de la machine virtuelle dont on souhaite analyser l'exécution ; on peut avoir la garantie à ce stade que la machine virtuelle n'est pas sous attaque. La double flèche représentée figure 2 schématise les échanges entre l'hyperviseur et la machine virtuelle durant cette phase.

Prenons l'exemple dans l'environnement d'exécution de la machine virtuelle VM1 hébergée par le serveur hôte 10. On rappelle que la mémoire est une ressource virtualisée mise à disposition de la machine virtuelle VM1 par l'intermédiaire de l'hyperviseur 11. L'hyperviseur sait identifier la zone mémoire allouée à la machine virtuelle VM1, c'est lui qui gère cette zone mémoire.

Dans la phase P1 de localisation et d'identification, dans une sous-étape E10 de localisation d'un point d'entrée, le module d'identification et de localisation 11-2 scanne la zone mémoire allouée à la machine virtuelle VM1, plus précisément la zone allouée au noyau de la machine virtuelle VM1, à la recherche d'une instruction représentative du point d'entrée d'une fonction courante. Dans un exemple de réalisation, le module 11-2 recherche via l'hyperviseur 11 dans la zone mémoire associée au noyau de la machine virtuelle VM1 une occurrence d'une valeur hexadécimale correspondant à une instruction représentative d'un point d'entrée d'une fonction courante. Par exemple, il est connu que la valeur « 55 » correspond à l'instruction « PUSH EBP » qui est représentative d'un point d'entrée d'une fonction. A partir de cette instruction le module 11-2 obtient une représentation en langage assembleur de la zone mémoire associée à la machine virtuelle VM1. A cet effet, des outils de désassemblage sont utilisés, par exemple la librairie « XED ». Dans la plupart des systèmes d'exploitation, par exemple pour le système Linux, le code d'une fonction commence par des instructions de création de pile locale, par exemple une instruction de la forme « PUSH EBP » suivie d'une instruction « MOV EBP, ESP ». Lorsque ce couple d'instructions est rencontré « PUSH EBP » correspond à la première instruction de la fonction courante.

Dans une sous-étape suivante E11 de localisation d'un point de sortie, il est identifié un point de sortie de la fonction courante qui est associé au point d'entrée trouvé précédemment. A cette fin il est recherché à partir du point d'entrée identifié précédemment une instruction associée de fin de fonction, par exemple une instruction de la forme « RET », « IRET », « SYSRET », « SYSEXIT », ou « JMP » inconditionnel. Ce point de sortie correspond à une instruction de fin de la fonction courante.

Dans une sous-étape E12 de calcul d'un condensé, il est calculé un condensé courant des instructions comprises entre l'instruction représentative du point d'entrée et l'instruction de fin de la fonction courante. Il n'est tenu compte pour ce calcul que des opérandes de type registre et des codes opérations. Il n'est pas tenu compte des adresses susceptibles d'être randomisées.

Le condensé courant est calculé au moyen d'une fonction de hachage. Dans cet exemple on utilise la même fonction que celle utilisée pour peupler la base de référence BDR, en l'espèce MD5.

Dans une sous-étape suivante E13 de recherche, le condensé courant calculé au cours de la sous-étape E12 est recherché dans la base de référence BDR. Dans un premier cas où le condensé courant est trouvé dans la base BDR (branche « ok » sur la figure 2), dans une sous-étape E14 d'enregistrement, il est mémorisé dans la table TF_{VM1} des adresses des fonctions du noyau associée à la machine virtuelle VM1, l'adresse de la première instruction où a été localisée la fonction courante, en association avec le prototype de la fonction noyau identifiée dans la base de référence BDR au cours de l'étape E13 de recherche. Dans un exemple de réalisation, l'adresse de la deuxième instruction qui correspond au point de sortie de la fonction est enregistrée dans la table TF_{VM1} des adresses des fonctions, en association avec l'adresse de la première instruction. Dans cet exemple, la table TF_{VM1} des adresses comprend donc pour chaque fonction du noyau de la machine virtuelle identifiée, l'adresse de la première instruction de la fonction et l'adresse de la dernière instruction de la fonction. Cela permet d'envisager qu'un administrateur de sécurité soit notifié de la fin de l'exécution d'une fonction, qu'il en connaisse le résultat et qu'il envisage éventuellement un traitement particulier en fonction du résultat de l'exécution.

Dans un second cas (branche « nok » sur la figure 2), le condensé n'est pas trouvé dans la base de référence BDR. Dans ce cas, on considère que les instructions pour lesquelles un condensé a été calculé au cours de la sous-étape E12 correspondent à des instructions qui ne sont pas associées à une fonction du noyau du système d'exploitation qui a fait l'objet d'un apprentissage. Dans cet exemple de réalisation, plus précisément dans le cadre de la supervision de l'exécution de la machine virtuelle VM1 à des fins de supervision de la sécurité on considère qu'il n'est pas pertinent de tenir compte d'une telle fonction.

Les sous-étapes E10 à E14 de la phase P1 de localisation et d'identification sont itérées afin d'identifier à chaque itération une fonction courante suivante dans la zone mémoire. Les étapes sont itérées jusqu'à analyse complète de la zone mémoire allouée à la machine virtuelle VM1 et plus précisément au noyau du système d'exploitation de la machine virtuelle VM1.

Au terme de la phase de localisation et d'identification, la table TF_{VM1} des adresses des fonctions du noyau mémorise ainsi l'ensemble des fonctions noyau du système d'exploitation qui ont été localisées lors de la phase P0 d'apprentissage et qui sont exécutées par la machine virtuelle VM1. Ces fonctions sont référencées dans la table TF_{VM1} en termes compréhensibles par un être humain, ici le prototype de la fonction, et associées chacune à une adresse mémoire du point d'entrée de la fonction.

A noter que l'adresse mémoire du point d'entrée est une adresse virtuelle et que cette adresse virtuelle reste la même lorsque la machine virtuelle VM1 est déplacée sur un autre serveur. C'est le système d'exploitation qui gère une table de correspondance entre les adresses virtuelles et les adresses physiques de la machine virtuelle. La table TF_{VM1} des adresses fonctions du noyau est donc pérenne lors du déplacement de la machine virtuelle VM1 sur un autre serveur dans la mesure où le système d'exploitation reste le même.

On comprend que cette table TF_{VM1} fournit des informations qui permettent à partir de données brutes observées au niveau de l'hyperviseur d'associer une sémantique à ce qui se passe au niveau de la machine virtuelle VM1 et d'aider ainsi à analyser l'exécution d'une machine virtuelle. En effet, la table TF_{VMx} permet de savoir précisément à quelle adresse de la zone mémoire d'une machine virtuelle se trouve une fonction du noyau et de quelle fonction du noyau il s'agit. La table TF_{VMx} constitue en quelque sorte une interface d'accès haut niveau à la machine virtuelle via l'hyperviseur.

Les étapes de la phase P1 de localisation et d'identification ont été décrites pour la machine virtuelle VM1. Ces étapes sont mises en œuvre également pour toutes les machines virtuelles de l'environnement dont on souhaite superviser l'exécution, ici les machines virtuelles VM2, etc.

Dans un exemple de réalisation, l'étape E13 de recherche comprend l'envoi à la base de données de référence d'un message d'interrogation qui comprend le nom de la fonction de hachage utilisée pour calculer le condensé. Cet exemple est adapté à un cas où la base de référence est une base de référence du commerce qui comprend des condensés calculés à partir d'une pluralité de fonctions de hachage. La recherche dans la base peut ainsi ne porter que sur une partie de la base. Elle est ainsi plus rapide. Par ailleurs, dans le cas où le condensé requis n'est pas trouvé, on a la garantie que la fonction courante n'est pas une fonction du noyau qui a fait l'objet de la phase d'apprentissage.

Dans l'exemple décrit ici, le module d'identification et de localisation 11-2 est sur le même serveur que les machines virtuelles VM1, VM2, etc. L'invention ne se limite pas à cette configuration. Ainsi dans un autre exemple de réalisation, le module d'identification 11-2 est sur un autre serveur, différent du serveur hôte 10 qui héberge les machines virtuelles VM1, VM2, etc. Dans ce cas, le module d'identification et de localisation 11-2 dialogue avec l'hyperviseur 11 du serveur 10 afin de mettre en œuvre les étapes de la phase P1 d'identification et de localisation du procédé décrit précédemment. On rappelle que la phase d'apprentissage est mise en œuvre indépendamment des machines virtuelles VM1, VM2, etc. La seule contrainte est que la phase d'apprentissage P0 soit mise en œuvre dans un environnement qui comprend des machines virtuelles dont les systèmes d'exploitation sont les mêmes que ceux des machines virtuelles pour lesquelles on souhaite analyser l'exécution.

Dans un autre exemple de réalisation, la phase d'apprentissage est mise en œuvre sur le même serveur hôte 10 que celui qui met en œuvre la phase de localisation et d'identification. Par exemple, la phase d'apprentissage P0 est mise en œuvre sur les machines virtuelles VM1, VM2, etc. du serveur hôte à une date T0 antérieure à une exploitation des machines virtuelles VM1, VM2, etc.

Une fois les étapes associées aux phases d'apprentissage P0, et P1 de localisation et d'identification des fonctions noyau exécutées, il est possible de superviser l'exécution d'une machine virtuelle. Une telle supervision peut s'avérer utile dans le cadre d'une détection de comportements malicieux, par observation des appels de fonctions du noyau, voire dans le cadre d'une réaction suite à la détection de comportements malicieux. La supervision peut consister à injecter l'appel de fonctions du noyau, ou à injecter du code dans des fonctions du noyau, ou encore contrôler l'exécution de fonctions du noyau en les rendant non exécutables. Les procédés suivants décrivent comment le procédé d'aide à l'analyse de l'exécution d'une machine virtuelle peut être utilisé pour mettre en œuvre une supervision de machines virtuelles.

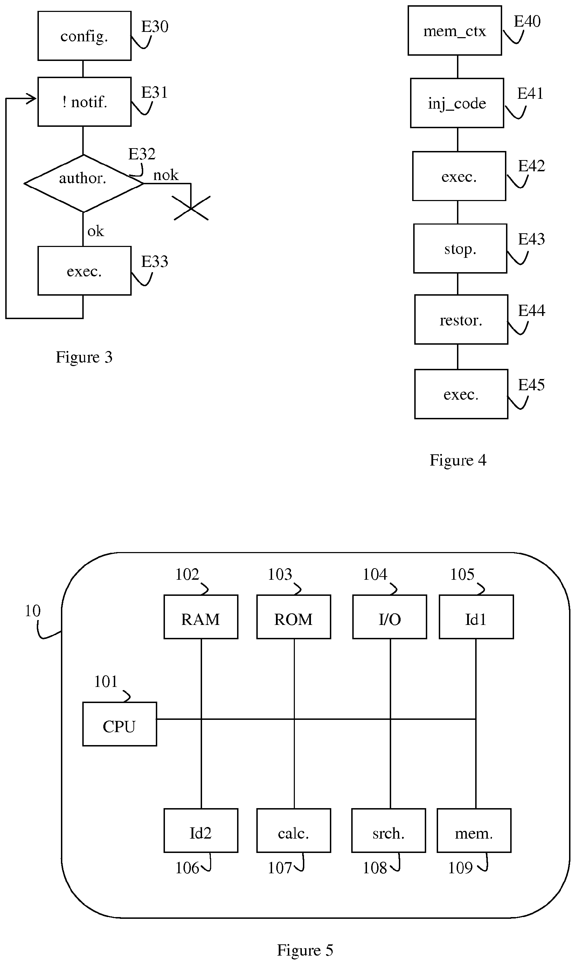

Les étapes d'un premier procédé de supervision, selon un exemple de réalisation, vont maintenant être décrites en relations avec la figure 3. Ces étapes sont mises en œuvre par un module de supervision qui comprend des instructions logicielles. Dans l'exemple décrit ici, le module de supervision est compris dans l'hyperviseur 11.

On suppose que les phases d'apprentissage P0 et P1 de localisation et d'identification ont été mises en œuvre et que l'hyperviseur 11 dispose des tables d'adresses des fonctions du noyau TF_{VM1,} TF_{VM2}, TF_{VMx} propres aux machines virtuelles VM1, VM2, ..., qui associent à un prototype de fonction du noyau du système d'exploitation d'une machine virtuelle une adresse mémoire correspondant à la première instruction de la fonction.

Dans une étape initiale E30 de configuration, un administrateur de sécurité (non représenté sur la figure 3) identifie dans le cadre de la supervision qu'il souhaite établir, les fonctions noyau du système d'exploitation d'une machine virtuelle, par exemple la machine virtuelle VM1, dont il souhaite être informé de l'exécution. Par exemple, l'administrateur souhaite être informé de l'exécution de la fonction « kill » qui permet d'envoyer un signal à un processus. Dans un exemple de réalisation, l'administrateur commande au module de supervision le positionnement, au niveau d'une zone mémoire allouée à la machine virtuelle VM1, de bits associés au mode d'exécution d'une page mémoire où figure la première instruction de la fonction noyau kill à « non exécutable ». Le module de supervision connaît, grâce à la table TF_{VM1} associée à la machine virtuelle VM1, l'adresse du point d'entrée de la fonction « kill » et donc la page mémoire qui contient les bits à positionner à non exécutable. Cela a comme effet de rendre non exécutable la fonction noyau « kill ».

Dans une étape suivante E31 de notification, mise en œuvre lors de l'exécution de la machine virtuelle VM1, l'administrateur reçoit via le module de supervision une notification d'une tentative d'exécution de la fonction noyau « kill ». Plus précisément, le mode d'exécution des fonctions comprises dans la zone mémoire où figure la première instruction de la fonction noyau « kill » ayant été positionné à non exécutable, une tentative d'exécution de la fonction « kill » par le système d'exploitation de la machine virtuelle VM1 génère une exception au niveau du système d'exploitation qui provoque un arrêt de la machine virtuelle VM1. L'hyperviseur est notifié de cette exception, il en informe le module de supervision.

Dans une étape suivante E32 de choix, le module de supervision choisit d'autoriser ou non l'exécution de la fonction noyau « kill ». L'autorisation peut être demandée explicitement à l'administrateur de sécurité. Dans un cas où l'exécution est autorisée (branche « ok » sur la figure 4), l'exécution de la machine virtuelle VM1 reprend au cours de l'étape E33 de reprise. Dans un second cas où l'exécution n'est pas autorisée (branche « nok »), le procédé s'arrête. Dans un autre exemple de réalisation, le choix peut être configuré au niveau du module de supervision : la notification peut donner lieu à un message explicite sur une console ou dans un journal, la notification peut arrêter systématiquement l'exécution de la machine virtuelle, etc. Une telle supervision est qualifiée de supervision active de la machine virtuelle VM1.

L'exemple décrit ici correspond à une supervision active de l'exécution de la machine virtuelle VM1 dans le sens où l'hyperviseur reçoit en temps réel des informations sur l'état de la machine virtuelle, conformément à la configuration établie au cours de l'étape initiale E30.

Le procédé est décrit ici avec des fonctions du noyau du système d'exploitation qui constituent les fonctions élémentaires du système d'exploitation. On peut envisager d'étendre le procédé à des fonctions plus haut niveau, comme des programmes utilisateur. Cependant le procédé devient alors beaucoup plus spécifique.

Dans un autre exemple de procédé de supervision (non représenté sur la figure), le module de supervision injecte dans le code de fonctions du noyau d'une machine virtuelle dont il souhaite superviser l'exécution, une ou plusieurs instructions d'interception d'activité. De telles instructions peuvent interrompre ou non l'exécution de la fonction. Dans les deux cas, l'hyperviseur est notifié de l'exécution de la fonction. Par exemple, on connaît l'instruction « VMcall », qui interrompt l'exécution de la machine virtuelle et envoie une notification à l'hyperviseur. On connaît également l'instruction « VMfunc » qui notifie l'hyperviseur de son exécution sans interrompre l'exécution de la machine virtuelle. Cette instruction est avantageuse en termes de performance du procédé de supervision. Ainsi, selon l'instruction que l'on injecte on peut choisir les fonctions du noyau pour lesquelles on peut interrompre l'exécution de la machine virtuelle et celles pour lesquelles on ne doit pas l'interrompre.

Les étapes d'un deuxième procédé de supervision, selon un exemple de réalisation, vont maintenant être décrites en relation avec la figure 4. Ces étapes sont mises en œuvre par un module de supervision par injection d'appel. Dans l'exemple décrit ici, le module de supervision par injection d'appel est un module logiciel compris dans l'hyperviseur 11.

Dans cet exemple de réalisation, l'administrateur de sécurité commande via le module de supervision, l'exécution d'une fonction du noyau du système d'exploitation sur la machine virtuelle VM1. Une telle commande peut être associée à une réaction suite à la détection d'un comportement malveillant sur la machine virtuelle VM1. Dans ce cas, l'administrateur souhaite par exemple commander l'exécution de la fonction « kill ».

Dans une étape E40 de sauvegarde, le module de supervision commande à l'hyperviseur une sauvegarde du contexte du processeur associé à la machine virtuelle VM1. A cet effet, la machine virtuelle VM1 est temporairement arrêtée et l'adresse de l'instruction courante, désignée également par « IP » (pour « Instruction Pointer »), et les registres associés au processeur sont sauvegardés. Les registres correspondent aux opérandes des instructions.

Dans une étape suivante E41 d'injection, le module de supervision commande l'exécution de la fonction du noyau. A cette fin, il positionne le registre d'instruction, ou IP, à l'adresse de la fonction « kill » qui figure dans la table TF_{VM1} associée à la machine virtuelle VM1 et construite au cours de la phase P1 d'identification et de localisation décrite précédemment. Le module de supervision charge également les paramètres de la fonction « kill » tel que définis par le prototype dans les registres appropriés.

Dans une étape suivante E42 de reprise, le module de supervision commande la reprise de l'exécution de la machine virtuelle VM1. La fonction du noyau « kill » est alors exécutée dans le registre IP. La fonction « kill » retourne un résultat qui est enregistré et analysé par le module de supervision.

Dans une deuxième étape E43 d'arrêt, le module de supervision commande l'arrêt de la machine virtuelle VM1.

Dans une étape suivante E44 de restauration, les registres du processeur de la machine virtuelle VM1 sont restaurés à partir des valeurs sauvegardées, et le pointeur d'instruction est positionné à la valeur sauvegardée initialement.

Dans une étape E45 de reprise, le module de supervision commande la reprise de l'exécution de la machine virtuelle VM1.

Ce mode de supervision constitue une supervision active de la machine virtuelle par injection d'appel de fonction.

Dans un autre exemple de réalisation, le module de supervision est adapté pour mettre en œuvre une supervision passive par injection d'appel de fonction. Par exemple, il est observé à intervalle régulier ce qui se passe au niveau de la machine virtuelle en termes de processus actifs. Dans ce cas, il est prévu à intervalle régulier d'exécuter les fonctions du noyau qui listent les processus actifs.

Un dispositif d'aide à l'analyse de l'exécution d'au moins une machine virtuelle va maintenant être décrit en relation avec la figure 5.

Le dispositif 10 d'aide à l'analyse de l'exécution d'une machine virtuelle est un équipement informatique tel que le serveur hôte 10, agencé pour héberger au moins une machine virtuelle. Le dispositif 10 d'aide à l'analyse comprend une couche de virtualisation destinée à héberger l'hyperviseur 11. Dans un exemple de réalisation, l'hyperviseur comprend le module 11-2 de localisation et d'identification de fonctions du noyau. L'hyperviseur 11 est agencé pour virtualiser des ressources matérielles du dispositif 10 afin de fournir aux machines virtuelles VM1, VM2, ..., les ressources qui lui sont nécessaires. Le dispositif 10 d'aide à l'analyse de l'exécution d'une machine virtuelle comprend de manière classique :
- un microprocesseur 101, ou « CPU » (de l'anglais «Central Processing Unit »), destiné à charger des instructions en mémoire, à les exécuter, à effectuer des opérations,
- un ensemble de mémoires, dont une mémoire volatile 102, ou « RAM » (pour « Random Access Memory ») utilisée pour exécuter des instructions de code, stocker des variables, etc., et une mémoire de stockage 103 de type « EEPROM » (de l'anglais « Electronically-Erasable Programmable Read-Only Memory). La mémoire de stockage 103 est agencée pour mémoriser des applications qui comprennent des instructions de code pour mettre en œuvre les étapes du procédé d'aide à l'analyse de l'exécution d'au moins une machine virtuelle. En particulier, elle mémorise des instructions de code pour la mise en œuvre du module de localisation et d'identification 11-2 de l'hyperviseur 11 dans la couche de virtualisation. Dans un exemple de réalisation, La mémoire de stockage 103 est également agencée pour stocker les tables des adresses des fonctions du noyau TF_{VMX.} Dans un autre exemple de réalisation, elle est également agencée pour stocker la base de référence BDR.
- des interfaces de communication 104, agencées pour que les entités communiquent. En particulier, les interfaces 104 sont adaptées pour faciliter la communication avec les machines virtuelles et leur système d'exploitation. Les interfaces de communication 104 sont également agencées pour accéder à la base de données de référence BDR et aux tables TF_{VMx} des adresses des fonctions du noyau du système d'exploitation des machine virtuelle.

On comprend, au vu de la description et du contexte d'architecture en cloud computing que le microprocesseur 101, les mémoires 102, 103, les interfaces de communication 104 sont des ressources matérielles d'une couche d'exécution matérielle du dispositif 10. Ces ressources sont destinées à être virtualisées par l'hyperviseur 11 et mises à disposition des machines virtuelles sous forme virtualisées.

Le dispositif 10 d'aide à l'analyse de l'exécution d'une machine virtuelle comprend également :
- un premier module d'identification 105, agencé pour identifier dans une zone mémoire associée à la machine virtuelle par l'hyperviseur, une première instruction correspondant à un point d'entrée d'une fonction courante de la machine virtuelle. Le premier module d'identification 105 est agencé pour mettre en œuvre l'étape E10 du procédé d'aide à l'analyse de l'exécution d'une machine virtuelle tel que décrit précédemment,
- un deuxième module d'identification 106, agencé pour identifier dans la zone mémoire une deuxième instruction correspondant à la fin d'exécution de ladite fonction courante. Le deuxième module d'identification 106 est agencé pour mettre en œuvre l'étape E11 du procédé d'aide à l'analyse de l'exécution d'une machine virtuelle tel que décrit précédemment,
- un module de calcul 107, agencé pour calculer un condensé des instructions comprises entre la première instruction et la deuxième instruction de la fonction courante. Le module de calcul 107 est agencé pour mettre en œuvre l'étape E12 du procédé décrit précédemment,
- un module de recherche 108, agencé pour rechercher dans une base de données de référence ledit condensé, ladite base comprenant un ensemble de condensés de fonctions du noyau du système d'exploitation de la machine virtuelle associés respectivement à un prototype de ladite fonction du noyau. Le module de recherche 108 est agencé pour mettre en œuvre l'étape E13 du procédé décrit précédemment,
- un module d'enregistrement 109, agencé pour enregistrer une adresse du point d'entrée de la fonction courante en association avec le prototype de la fonction du noyau, lorsque ledit condensé est trouvé dans la base de référence. Le module d'enregistrement 109 est agencé pour mettre en œuvre l'étape E14 du procédé décrit précédemment.

Le premier module d'identification 105, le deuxième module d'identification 106, le module de calcul 107, le module de recherche 108 et le module d'enregistrement, l'hyperviseur 11 sont de préférence des modules logiciels comprenant des instructions logicielles pour faire exécuter les étapes de la phase de localisation et d'identification du procédé d'aide à l'analyse de l'exécution d'une machine virtuelle précédemment décrit.

L'invention concerne donc aussi :
- un programme d'ordinateur comportant des instructions pour la mise en œuvre du procédé d'aide à l'analyse tel que décrit précédemment lorsque ce programme est exécuté par un processeur du dispositif d'aide à l'analyse 10,
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

Dans un exemple de réalisation, correspondant au cas où le dispositif 10 d'aide à l'exécution est agencé pour mettre en œuvre la phase P0 d'apprentissage, l'hyperviseur comprend le module d'apprentissage 11-1. Dans ce cas, le dispositif 10 d'aide à l'analyse de l'exécution d'une machine virtuelle comprend également les modules suivants (non représentés sur la figure 5) :
- un module de localisation, agencé pour localiser sur la machine virtuelle au moins une fonction du noyau du système d'exploitation de la machine virtuelle,
- un troisième module d'identification, agencé pour identifier dans la zone mémoire associée à la machine virtuelle une première instruction de référence correspondant au point d'entrée de la fonction du noyau,
- un quatrième module d'identification, agencé pour identifier dans la mémoire une deuxième instruction de référence correspondant à la fin d'exécution de la fonction du noyau,
- un module de calcul, agencé pour calculer un condensé des instructions comprises entre la première instruction de référence et la deuxième instruction de référence de la fonction du noyau,
- un module d'enregistrement, agencé pour enregistrer ledit condensé en association avec un prototype de ladite fonction du noyau, ledit prototype comprenant le nom de la fonction du noyau, le type de l'ensemble des paramètres d'entrée et le type du résultat de la fonction du noyau.

Ces modules sont de préférence des modules logiciels, agencés pour mettre en œuvre les étapes de la phase d'apprentissage du procédé d'aide à l'analyse de l'exécution d'une machine virtuelle tel que décrit précédemment.

Dans l'exemple décrit ici, le module d'apprentissage 11-1 et le module d'identification et de localisation 11-2 sont compris dans l'hyperviseur. Dans un autre exemple de réalisation, le module d'apprentissage 11-1 et le module de localisation et d'identification 11-2 sont distincts de l'hyperviseur 11. Par exemple, les machines virtuelles VM1, VM2, etc. sont hébergées sur un deuxième serveur hôte et le module de localisation et d'identification 11-2 dialogue avec l'hyperviseur du deuxième serveur hôte afin de mettre en œuvre les étapes de la phase d'identification et de localisation telles que décrites précédemment. On rappelle que la phase d'apprentissage peut être mise en œuvre indépendamment des machines virtuelles du serveur hôte 10.

### ANNEXE

**Kill :**

| | | | |
|---|---|---|---|
| 0xc106d9e0 | (01) | 55 | PUSH EBP |
| 0xc106d9e1 | (02) | 89e5 | MOV EBP, ESP |
| 0xc106d9e3 | (01) | 3e | DB 0x3e |
| 0xc106d9e3 | (05) | 3e 8d7426 00 | LEA ESI, [ESI+0x0] |
| 0xc106d9e8 | (03) | 8b55 0c | MOV EDX, [EBP+0xc] |
| 0xc106d9eb | (03) | 8b45 08 | MOV EAX, [EBP+0x8] |
| 0xc106d9ee | (05) | e8 ede7ffff | CALL 0xc106cle0 |
| Oxc106d9f3 | (01) | 5d | POP EBP |
| Oxc106d9f4 | (01) | c3 | RET |

**Getpid :**

| | | | |
|---|---|---|---|
| 0xc106f7b0 | (01) | 55 | PUSH EBP |
| 0xc106f7b1 | (02) | 89e5 | MOV EBP, ESP |
| 0xc106f7b3 | (01) | 3e | DB 0x3e |
| 0xc106f7b3 | (05) | 3e 8d7426 00 | LEA ESI, [ESI+0x0] |
| 0xc106f7b8 | (06) | 64 al 54a0adc1 | MOV EAX, FS:[0xclada054] |
| 0xc106f7be | (06) | 8b80 04030000 | MOV EAX, [EAX+0x304] |
| 0xc106f7c4 | (06) | 8b80 20030000 | MOV EAX, [EAX+0x320] |
| 0xc106f7ca | (05) | e8 21770000 | CALL 0xc 1076ef0 |
| 0xc106f7cf | (01) | 5d | POP EBP |
| 0xc106f7d0 | (01) | c3 | RET |

## Revendications

1. Procédé d'aide à l'analyse de l'exécution d'au moins une machine virtuelle hébergée par un serveur hôte (10), la machine virtuelle comprenant un système d'exploitation (OS1) communiquant avec un hyperviseur (11) du système hôte, ledit hyperviseur s'interfaçant entre le système d'exploitation et des ressources matérielles du système hôte, ledit procédé comprenant les étapes suivantes :
- identification (E10) d'une première instruction correspondant à un point d'entrée d'une fonction du noyau de la machine virtuelle, dite fonction courante, en scannant pas à pas une zone mémoire allouée au noyau de la machine virtuelle par l'hyperviseur, jusqu'à trouver ladite première instruction,
- identification (E11) d'une deuxième instruction correspondant à la fin de ladite fonction courante, en scannant pas à pas la zone mémoire allouée au noyau de la machine virtuelle, à partir du point d'entrée identifié jusqu'à trouver ladite deuxième instruction,
- calcul (E12) d'un condensé des instructions comprises entre la première instruction et la deuxième instruction de la fonction courante,
- recherche (E13) dans une base de données de référence (BDR) dudit condensé, ladite base comprenant un ensemble de condensés de fonctions du noyau du système d'exploitation de la machine virtuelle associés respectivement à un prototype de ladite fonction du noyau,
- lorsque ledit condensé est trouvé dans la base de référence, enregistrement (E14) d'une adresse du point d'entrée de la fonction courante en association avec le prototype de la fonction du noyau associé avec ledit condensé dans la base de référence.

2. Procédé selon la revendication 1, dans lequel l'étape de recherche comprend une étape d'envoi d'un message d'interrogation à la base de données de référence, ledit message d'interrogation comprenant le nom d'une fonction de hachage utilisée pour calculer le condensé.

3. Procédé d'analyse selon l'une des revendications précédentes, comprenant dans une phase d'apprentissage (P0), pour au moins le système d'exploitation d'une machine virtuelle d'apprentissage, ledit système d'exploitation étant identique à celui de la machine virtuelle, les étapes suivantes :
- localisation (E0) d'au moins une fonction du noyau du système d'exploitation,
- identification (E1) dans une zone mémoire associée à la machine virtuelle d'apprentissage d'une première instruction de référence correspondant au point d'entrée de la fonction du noyau, en scannant pas à pas la zone mémoire jusqu'à trouver ladite première instruction de référence,
- identification (E2) dans la zone mémoire associée à la machine virtuelle d'apprentissage d'une deuxième instruction de référence correspondant à la fin de la fonction du noyau, en scannant pas à pas la zone mémoire jusqu' à trouver ladite deuxième instruction de référence,
- calcul (E3) d'un condensé des instructions comprises entre la première instruction de référence et la deuxième instruction de référence de la fonction du noyau,
- enregistrement (E4) dudit condensé en association avec un prototype de ladite fonction du noyau, ledit prototype comprenant le nom de la fonction du noyau.

4. Procédé selon l'une des revendications précédentes, comprenant, préalablement à l'étape de calcul du condensé des instructions, une étape de suppression dans les instructions comprises entre la première instruction et la deuxième instruction de zones de données aléatoires.

5. Procédé d'analyse selon l'une des revendications 1 à 3 comprenant, préalablement à l'étape de calcul du condensé des instructions, une étape de sélection des opérandes de type registre et des codes opérations compris entre la première instruction identifiée et la deuxième instruction identifiée de zones de données aléatoires.

6. Procédé selon la revendication 1, dans lequel une adresse correspondant à l'adresse de fin de la fonction courante est enregistrée en association avec le prototype de la fonction du noyau.

7. Utilisation du procédé selon l'une des revendications précédentes par un module de supervision de l'exécution d'une machine virtuelle, ledit module de supervision commandant à l'hyperviseur d'injecter dans la machine virtuelle l'appel d'une fonction du noyau.

8. Utilisation du procédé selon l'une des revendications 1 à 6 par un module de supervision de l'exécution d'une machine virtuelle, ledit module de supervision commandant à l'hyperviseur de positionner des bits associés au caractère exécutable d'une fonction du noyau à non exécutable de manière à recevoir une notification lors de l'exécution de ladite fonction par la machine virtuelle.

9. Utilisation du procédé selon l'une des revendications 1 à 6 par un module de supervision de l'exécution d'une machine virtuelle, ledit module de supervision commandant à l'hyperviseur d'injecter une instruction d'interception d'activité dans le code d'une fonction du noyau de manière à recevoir une notification lors de l'exécution de ladite fonction par la machine virtuelle.

10. Serveur (11) comprenant une entité d'aide à l'analyse de l'exécution d'au moins une machine virtuelle hébergée par le serveur hôte, ladite machine virtuelle comprenant un système d'exploitation (OS1) communiquant avec un hyperviseur (11) du deuxième serveur hôte, ledit hyperviseur s'interfaçant entre le système d'exploitation et des ressources matérielles du deuxième serveur hôte, ladite entité résidant dans l'hyperviseur du serveur, l'entité/le serveur comprenant :
- des premiers moyens d'identification (105), agencés pour identifier une première instruction correspondant à un point d'entrée d'une fonction du noyau de la machine virtuelle, dite fonction courante, en scannant pas à pas une zone mémoire allouée au noyau de la machine virtuelle par l'hyperviseur jusqu'à trouver ladite première instruction,
- des deuxièmes moyens d'identification (106), agencés pour identifier une deuxième instruction correspondant à la fin de ladite fonction courante, en scannant pas à pas la zone mémoire allouée au noyau de la machine virtuelle jusqu'à trouver ladite deuxième instruction,
- des moyens de calcul (107), agencés pour calculer un condensé des instructions comprises entre la première instruction et la deuxième instruction de la fonction courante,
- des moyens de recherche (108), agencés pour rechercher dans une base de données de référence (BDR) ledit condensé, ladite base comprenant un ensemble de condensés de fonctions du noyau du système d'exploitation de la machine virtuelle associés respectivement à un prototype de ladite fonction du noyau,
- des moyens d'enregistrement (109), agencés pour enregistrer, lorsque ledit condensé est trouvé dans la base de référence, une adresse du point d'entrée de la fonction courante en association avec le prototype de la fonction du noyau associé avec ledit condensé dans la base de référence.

11. Programme d'ordinateur sur un support de données et chargeable dans la mémoire d'un ordinateur, le programme comprenant des portions de code pour l'exécution des étapes du procédé d'aide à l'analyse de l'exécution d'au moins une machine virtuelle selon l'une quelconque des revendications 1 à 6, lorsque le programme est exécuté sur ledit ordinateur.

12. Support de données dans lequel est enregistré le programme selon la revendication 11.

## Patentansprüche

1. Verfahren zur Unterstützung bei der Analyse der Ausführung mindestens einer virtuellen Maschine, die von einem Host-Server (10) gehostet wird, wobei die virtuelle Maschine ein Betriebssystem (OS1) umfasst, das mit einem Hypervisor (11) des Host-Systems kommuniziert, wobei sich der Hypervisor zwischen das Betriebssystem und Hardware-Ressourcen des Host-Systems koppelt, wobei das Verfahren die folgenden Schritte umfasst:
- Identifizieren (E10) einer ersten Anweisung, die einem Eingangspunkt einer Funktion des Kernels der virtuellen Maschine, aktuelle Funktion genannt, entspricht, indem ein dem Kernel der virtuellen Maschine vom Hypervisor zugewiesener Speicherbereich schrittweise gescannt wird, bis die erste Anweisung gefunden wird,
- Identifizieren (E11) einer zweiten Anweisung, die dem Ende der aktuellen Funktion entspricht, indem der dem Kernel der virtuellen Maschine vom Hypervisor zugewiesene Speicherbereich ausgehend von dem identifizierten Eingangspunkt schrittweise gescannt wird, bis die zweite Anweisung gefunden wird,
- Berechnen (E12) eines Digest der Anweisungen, die zwischen der ersten Anweisung und der zweiten Anweisung der aktuellen Funktion enthalten sind,
- Suchen (E13) des Digest in einer Referenzdatenbank (BDR), wobei die Datenbank eine Menge von Digests von Funktionen des Kernels des Betriebssystems der virtuellen Maschine umfasst, die jeweils einem Prototypen der Funktion des Kernels zugeordnet sind,
- wenn das Digest in der Referenzdatenbank gefunden wird, Speichern (E14) einer Adresse des Eingangspunkts der aktuellen Funktion unter Zuordnung zu dem zugeordneten Prototypen der Funktion des Kernels mit dem Digest in der Referenzdatenbank.

2. Verfahren nach Anspruch 1, bei dem der Suchschritt einen Schritt des Sendens einer Abfragenachricht an die Referenzdatenbank umfasst, wobei die Abfragenachricht den Namen einer Hash-Funktion umfasst, die zum Berechnen des Digest verwendet wird.

3. Analyseverfahren nach einem der vorhergehenden Ansprüche, umfassend in einer Lernphase (P0), zumindest für das Betriebssystem einer virtuellen Lernmaschine, wobei das Betriebssystem identisch mit dem der virtuellen Maschine ist, die folgenden Schritte:
- Lokalisieren (E0) mindestens einer Funktion des Kernels des Betriebssystems,
- Identifizieren (E1), in einem der virtuellen Lernmaschine zugeordneten Speicherbereich, einer ersten Referenzanweisung, die dem Eingangspunkt der Funktion des Kernels entspricht, indem der Speicherbereich schrittweise gescannt wird, bis die erste Referenzanweisung gefunden wird,
- Identifizieren (E2), in dem der virtuellen Lernmaschine zugeordneten Speicherbereich, einer zweiten Referenzanweisung, die dem Ende der Funktion des Kernels entspricht, indem der Speicherbereich schrittweise gescannt wird, bis die zweite Referenzanweisung gefunden wird,
- Berechnen (E3) eines Digest der zwischen der ersten Referenzanweisung steht und der zweiten Referenzanweisung der Funktion des Kernels enthaltenen Anweisungen,
- Speichern (E4) des Digest unter Zuordnung zu einem Prototypen der Funktion des Kernels, wobei der Prototyp den Namen der Funktion des Kernels umfasst.

4. Verfahren nach einem der vorhergehenden Ansprüche, umfassend, vor dem Schritt des Berechnens des Digest der Anweisungen, einen Schritt des Löschens von Zufallsdatenbereichen in den zwischen der ersten Anweisung und der zweiten Anweisung enthaltenen Anweisungen.

5. Analyseverfahren nach einem der Ansprüche 1 bis 3, umfassend, vor dem Schritt des Berechnens des Digest der Anweisungen, einen Schritt des Auswählens der Operanden vom Typ Register und der Operationscodes, die zwischen der ersten identifizierten Anweisung und der zweiten identifizierten Anweisung enthalten sind.

6. Verfahren nach Anspruch 1, bei dem eine Adresse, die der Ende-Adresse der aktuellen Funktion entspricht, unter Zuordnung zu dem Prototypen der Funktion des Kernels gespeichert wird.

7. Verwendung des Verfahrens nach einem der vorhergehenden Ansprüche durch ein Modul zur Überwachung der Ausführung einer virtuellen Maschine, wobei das Überwachungsmodul dem Hypervisor befiehlt, in die virtuelle Maschine den Aufruf einer Funktion des Kernels zu injizieren.

8. Verwendung des Verfahrens nach einem der Ansprüche 1 bis 6 durch ein Modul zur Überwachung der Ausführung einer virtuellen Maschine, wobei das Überwachungsmodul dem Hypervisor befiehlt, Bits, die dem ausführbaren Charakter einer Funktion des Kernels zugeordnet sind, auf nicht ausführbar zu setzen, so dass bei der Ausführung der Funktion durch die virtuelle Maschine eine Benachrichtigung erhalten wird.

9. Verwendung des Verfahrens nach einem der Ansprüche 1 bis 6 durch ein Modul zur Überwachung der Ausführung einer virtuellen Maschine, wobei das Überwachungsmodul dem Hypervisor befiehlt, eine Aktivitätsabfanganweisung in den Code einer Funktion des Kernels zu injizieren, so dass bei der Ausführung der Funktion durch die virtuelle Maschine eine Benachrichtigung erhalten wird.

10. Server (11), der eine Einheit zur Unterstützung bei der Analyse der Ausführung mindestens einer virtuellen Maschine, die von dem Host-Server gehostet wird, umfasst, wobei die virtuelle Maschine ein Betriebssystem (OS1) umfasst, das mit einem Hypervisor (11) des zweiten Host-Servers kommuniziert, wobei sich der Hypervisor zwischen das Betriebssystem und Hardware-Ressourcen des Host-Systems koppelt, wobei die Einheit im Hypervisor des Servers residiert, wobei die Einheit/der Server umfasst:
- erste Identifizierungseinrichtungen (105), die dazu eingerichtet sind, eine erste Anweisung zu identifizieren, die einem Eingangspunkt einer Funktion des Kernels der virtuellen Maschine, aktuelle Funktion genannt, entspricht, indem sie einen dem Kernel der virtuellen Maschine vom Hypervisor zugewiesenen Speicherbereich schrittweise scannen, bis die erste Anweisung gefunden wird,
- zweite Identifizierungseinrichtungen (106), die dazu eingerichtet sind, eine zweite Anweisung zu identifizieren, die dem Ende der aktuellen Funktion entspricht, indem sie den dem Kernel der virtuellen Maschine vom Hypervisor zugewiesenen Speicherbereich schrittweise scannen, bis die zweite Anweisung gefunden wird,
- Berechnungseinrichtungen (107), die dazu eingerichtet sind, ein Digest der zwischen der ersten Anweisung und der zweiten Anweisung der aktuellen Funktion enthaltenen Anweisungen zu berechnen,
- Sucheinrichtungen (108), die dazu eingerichtet sind, das Digest in einer Referenzdatenbank (BDR) zu suchen, wobei die Datenbank eine Menge von Digests von Funktionen des Kernels des Betriebssystems der virtuellen Maschine umfasst, die jeweils einem Prototypen der Funktion des Kernels zugeordnet sind,
- Speichereinrichtungen (109), die dazu eingerichtet sind, wenn das Digest in der Datenbank gefunden wird, eine Adresse des Eingangspunktes der aktuellen Funktion unter Zuordnung zu dem zuordneten Prototypen der Funktion des Kernels in Verbindung mit dem Digest in der Referenzdatenbank zu speichern.

11. Computerprogramm auf einem Datenträger, das in den Speicher eines Computers geladen werden kann, wobei das Programm Codeabschnitte umfasst, die bei der Ausführung des Programms auf dem Computer die Schritte des Verfahrens zur Unterstützung bei der Analyse der Ausführung mindestens einer virtuellen Maschine nach einem der Ansprüche 1 bis 6 ausführen.

12. Datenträger, in dem das Programm nach Anspruch 11 gespeichert ist.

## Claims

1. Method for assisting with the analysis of the execution of at least one virtual machine hosted by a host server (10), the virtual machine comprising an operating system (OS1) that communicates with a hypervisor (11) of the host system, said hypervisor interfacing between the operating system and hardware resources of the host system, said method comprising the following steps:
- identifying (E10) a first instruction corresponding to an entry point of a kernel function of the virtual machine, called the current function, by scanning stepwise a memory region allocated to the kernel of the virtual machine by the hypervisor, until said first instruction is found,
- identifying (E11) a second instruction corresponding to the end of said current function, by scanning stepwise the memory region allocated to the kernel of the virtual machine, from the identified entry point until said second instruction is found,
- computing (E12) a digest of the instructions comprised between the first instruction and the second instruction of the current function,
- searching (E13) a reference database (BDR) for said digest, said database containing a set of digests of kernel functions of the operating system of the virtual machine, which are respectively associated with a prototype of said kernel function,
- when said digest is found in the reference database, storing (E14) an address of the entry point of the current function in association with the prototype of the kernel function associated with said digest in the reference database.

2. Method according to Claim 1, wherein the searching step comprises a step of sending an interrogation message to the reference database, said interrogation message containing the name of a hash function used to compute the digest.

3. Analysing method according to one of the preceding claims, comprising, in a learning phase (P0), for at least the operating system of a virtual learning machine, said operating system being identical to that of the virtual machine, the following steps:
- locating (E0) at least one kernel function of the operating system,
- identifying (E1), in a memory region associated with the virtual learning machine, a first reference instruction corresponding to the entry point of the kernel function, by scanning stepwise the memory region until said first reference instruction is found,
- identifying (E2), in the memory region associated with the virtual learning machine, a second reference instruction corresponding to the end of the kernel function, by scanning stepwise the memory region until said second reference instruction is found,
- computing (E3) a digest of the instructions comprised between the first reference instruction and the second reference instruction of the kernel function,
- storing (E4) said digest in association with a prototype of said kernel function, said prototype containing the name of the kernel function.

4. Method according to one of the preceding claims, comprising, prior to the step of computing the digest of the instructions, a step of removing regions of random data from the instructions comprised between the first instruction and the second instruction.

5. Analysing method according to one of Claims 1 to 3, comprising, prior to the step of computing the digest of the instructions, a step of selecting parameters of register type and operation codes comprised between the identified first instruction and the identified second instruction of regions of random data.

6. Method according to Claim 1, wherein an address corresponding to the end address of the current function is stored in association with the prototype of the kernel function.

7. Use of the method according to one of the preceding claims by a module for supervising the execution of a virtual machine, said supervising module commanding the hypervisor to inject the call of a kernel function into the virtual machine.

8. Use of the method according to one of Claims 1 to 6 by a module for supervising the execution of a virtual machine, said supervising module commanding the hypervisor to position bits associated with the executable character of a kernel function to non-executable so as to receive a notification during the execution of said function by the virtual machine.

9. Use of the method according to one of Claims 1 to 6 by a module for supervising the execution of a virtual machine, said supervising module commanding the hypervisor to inject an activity-interception instruction into the code of a kernel function so as to receive a notification during the execution of said function by the virtual machine.

10. Server (11) comprising an entity for assisting with the analysis of the execution of at least one virtual machine hosted by the host server, said virtual machine comprising an operating system (OS1) that communicates with a hypervisor (11) of the second host server, said hypervisor interfacing between the operating system and hardware resources of the second host server, said entity residing in the hypervisor of the server, the entity/server comprising:
- first identifying means (105), arranged to identify a first instruction corresponding to an entry point of a kernel function of the virtual machine, called the current function, by scanning stepwise a memory region allocated to the kernel of the virtual machine by the hypervisor, until said first instruction is found,
- second identifying means (106), arranged to identify a second instruction corresponding to the end of said current function, by scanning stepwise the memory region allocated to the kernel of the virtual machine, until said second instruction is found,
- computing means (107), arranged to compute a digest of the instructions comprised between the first instruction and the second instruction of the current function,
- searching means (108), arranged to search a reference database (BDR) for said digest, said database containing a set of digests of kernel functions of the operating system of the virtual machine, which are respectively associated with a prototype of said kernel function,
- storing means (109), arranged to store, when said digest is found in the reference database, an address of the entry point of the current function in association with the prototype of the kernel function associated with said digest in the reference database.

11. Computer program on a data medium and loadable into the memory of a computer, the program containing code segments for executing the steps of the method for assisting with the analysis of the execution of at least one virtual machine according to any one of Claims 1 to 6, when the program is executed on said computer.

12. Data medium on which the program according to Claim 11 is stored.
